# FASCICULE DE BREVET EUROPEEN

(11) **EP 0 495 543 B1**
(45) Date de publication et mention de la délivrance du brevet: **19.06.1996**
(21) Numéro de dépôt: 92200031.0
(22) Date de dépôt: 07.01.1992
(51) Int. Cl.: C09K 5/04

(54) **Compositions comprenant du 1,1,1,2-tétrafluoroéthane et utilisations de ces compositions**
Zusammensetzungen die 1,1,1,2-tetrafluoroethan enthalten und Verwendung von diesen Zusammensetzungen
Compositions comprising 1,1,1,2-tetrafluoroethane and use of these compositions

(30) Priorité: 18.01.1991 BE 9100039
(43) Date de publication de la demande: 22.07.1992
(73) Titulaire: SOLVAY (Société Anonyme), B-1050 Bruxelles (BE)
(72) Inventeur: Dantinne, Paul, B-1120 Bruxelles (BE); Barthelemy, Pierre, B-1370 Jodoigne (BE); Balthasart, Dominique, B-1020 Bruxelles (BE)
(74) Mandataire: Jacques, Philippe

(56) Documents cités:
- JAPANESE PATENT OFFICE, FILE SUPPLIERS JAPS, Tokyo, JP; & JP-A-1 139 539 (ASAHI GLASS CO., LTD)
- JAPANESE PATENT OFFICE, FILE SUPPLIERS JAPS, Tokyo, JP; & JP-A-60 110 732 (ASAHI KASEI KOGYO K.K.)
- JAPANESE PATENT OFFICE, FILE SUPPLIERS JAPS, Tokyo, JP;
- & JP-A-56 079 175 (DAIKIN IND. LTD)
- JAPANESE PATENT OFFICE, FILE SUPPLIER JAPS, Tokyo, JP; & JP-A-57 020 333 (TEIJIN LTD)

## Description

L'invention concerne des compositions comprenant du 1,1,1,2-tétrafluoroéthane et les utilisations de ces compositions.

Les chlorofluorocarbones perhalogénés sont utilisés dans les installations frigorifiques depuis plus de cinquante ans, cependant on connaît maintenant les risques que font courir certains de ces composés à l'environnement. On recherche donc des composés qui pourraient se substituer à ces chlorofluorocarbones.

Le 1,1,1,2-tétrafluoroéthane est connu comme agent de réfrigération (Brevet US 2885427), ayant un point d'ébullition à - 26,3°C. Il présente cependant les inconvénients d'avoir un "Greenhouse Warning Potential" (GWP) relativement élevé (0,26), ce qui le rend susceptible de contribuer à l'effet de serre, d'avoir une production frigorifique volumétrique relativement faible, tout au moins plus faible que le CFC 12, ce qui rend nécessaire de mettre en oeuvre plus de réfrigérant pour obtenir un système de capacité équivalente, d'avoir une efficacité thermodynamique relativement faible, tout au moins plus faible que celle du CFC 12, ce qui résulte en une augmentation de la consommation énergétique.

La présente invention vise à fournir des compositions qui ne présentent plus les inconvénients des produits antérieurs.

La présente invention concerne des compositions comprenant le 1,1,1,2-tétrafluoroéthane et le chlorure de méthyle.

L'invention concerne plus particulièrement une composition azéotropique ou pseudo-azéotropique comprenant le 1,1,1,2-tétrafluoroéthane et le chlorure de méthyle.

Les compositions selon l'invention comprennent habituellement plus de 10 % molaire de 1,1,1,2-tétrafluoroéthane. Généralement elles comprennent plus de 20 % molaire de 1,1,1,2-tétrafluoroéthane. De préférence elles comprennent plus de 30 % molaire de 1,1,1,2-tétrafluoroéthane.

Des compositions selon l'invention ayant donné de bons résultats comprennent généralement de 40 à 55 % molaire de 1,1,1,2-tétrafluoroéthane et de 45 à 60 % molaire de chlorure de méthyle. De préférence ces compositions comprennent de 45 à 50 % molaire de 1,1,1,2-tétrafluoroéthane et de 50 à 55 % molaire de chlorure de méthyle. Une composition tout particulièrement préférée, mesurée à la pression atmosphérique, comprend 48 % molaire de 1,1,1,2-tétrafluoroéthane (+/- 1 % molaire) et 52 % molaire de chlorure de méthyle. Une telle composition forme un azéotrope dont la température d'ébullition s'élève à - 28,5°C (+/- 1°C) à la pression de 101,3 kPa.

D'autres compositions selon l'invention ayant donné de bons résultats comprennent généralement de 55 à 80 % molaire de 1,1,1,2-tétrafluoroéthane et de 20 à 45 % molaire de chlorure de méthyle. De préférence ces compositions comprennent de 68 à 75 % molaire de 1,1,1,2-tétrafluoroéthane et de 25 à 32 % molaire de chlorure de méthyle. Une composition particulièrement préférée parmi celles-ci est une composition pseudo-azéotropique qui comprend 71,5 % molaire de 1,1,1,2-tétrafluoroéthane (+/- 1 % molaire) et 28,5 % molaire de chlorure de méthyle, mesurée à la pression atmosphérique. Cette composition forme un pseudo-azéotrope dont la température d'ébullition s'élève à - 27°C (+/- 1°C) à la pression atmosphérique.

Les différentes compositions selon l'invention peuvent également contenir éventuellement un ou plusieurs stabilisants, dont la nature exacte dépend principalement de l'utilisation envisagée de la composition.

La nature de ces stabilisants est connue de l'homme du métier et correspond à ceux utilisés habituellement pour stabiliser soit le 1,1,1,2-tétrafluoroéthane, soit les produits chlorés comprenant de 1 à 2 atomes de carbone tels que le chlorure de méthyle.

Généralement les compositions selon l'invention contiennent de 0,001 à 10 % en poids de stabilisants et de préférence de 0,1 à 5 % en poids.

Les compositions selon l'invention peuvent également contenir éventuellement un ou plusieurs autres additifs dont la nature chimique exacte dépend principalement de l'utilisation future de la composition.

Comme additifs on utilise notamment un hydrocarbure aliphatique saturé ou insaturé tel que pentane, isopentane, hexane, isohexane, néohexane, heptane, 2,3-diméthylbutane ou cyclopentane; un nitroalcane tel que nitrométhane, nitroéthane ou nitropropane; un triazole tel que 1,2,3-benzotriazole; une amine telle que diéthylamine, triéthylamine, isopropylamine, butylamine, diisopropylamine ou isobutylamine; une amylène; un alcool tel que méthanol, éthanol, n-propylalcool, n-butylalcool, i-butylalcool; un phosphite tel que triphénylphosphite ou tributylphosphite; un éther tel que tétrahydrofurane, méthylal, 1,3-dioxolane ou 1,4-dioxane; un époxyde tel que 1,2-époxybutane, 1,2-époxypropane, 1,2-butylène oxyde ou épichlorhydrine; une cétone telle que acétone, méthyléthylcétone ou méthylbutylcétone; un ester tel que méthylacétate, méthylformate, éthylformate, éthylacétate, propylacétate ou butylacétate; un furane tel que 2-méthylfurane, un pyrrole tel que N-méthylpyrrole; un hydrocarbure chloré ou fluoré tel que dichlorométhane, trichloréthane, trichloréthylène.

Généralement les compositions selon l'invention contiennent de 0,01 à 40 % en poids d'additifs et de préférence de 0,1 à 30 % en poids.

Les compositions selon l'invention peuvent également contenir éventuellement un ou plusieurs agents tensioactifs, un ou plusieurs agents émulsionnants, un ou plusieurs additifs de nettoyage, de l'eau, la nature de ceux-ci dépendant principalement de l'utilisation de la composition.

La composition azéotropique qui comprend 48 % molaire de 1,1,1,2-tétrafluoroéthane et 52 % molaire de chlorure de méthyle est légèrement inflammable. Les compositions qui comprennent plus de 55 % molaire de 1,1,1,2-tétrafluoroéthane ont des limites d'inflammabilité (mesurées dans une sphère d'un diamètre de 200 mm) inférieures à 17 % vol ou sont ininflammables (test effectué selon la norme EEC directive 84/449 test A11). La composition pseudo-azéotropique qui contient plus de 71,5 % molaire de 1,1,1,2-tétrafluoroéthane quant à elle est ininflammable.

Le 1,1,1,2-tétrafluoroéthane et le chlorure de méthyle qui forment les nouvelles compositions selon l'invention, sont des composés connus. De préférence ils sont mis en oeuvre dans la composition sous la forme de composés suffisamment purs pour éviter des effets néfastes durant l'utilisation de la composition code fluide réfrigérant ou influencer les propriétés d'azéotropie de la composition.

L'invention concerne également l'utilisation des compositions comprenant le 1,1,1,2-tétrafluoroéthane et le chlorure de méthyle notamment comme fluide réfrigérant, code agent pour gonfler des mousses de polyuréthane, comme agent porogène du polystyrène, comme agent propulseur pour conditionnement sous pression, comme agent gonflant des mousses de polyoléfines.

De bons résultats ont été obtenus lors de l'utilisation des compositions selon l'invention comme fluide réfrigérant et plus particulièrement lors de l'utilisation des compositions azéotropiques ou pseudo-azéotropiques, telle que definies précédemment.

Les compositions selon l'invention peuvent remplacer le CFC 12 utilisé dans le domaine de la réfrigération comme fluide réfrigérant sans qu'il soit nécessaire de modifier les compresseurs ou le dimensionnement des installations existantes. Les compositions selon l'invention ne sont pas considérées comme nocives pour l'environnement.

Par ailleurs le 1,1,1,2-tétrafluoroéthane ne contient pas de chlore et a donc un "Ozone Depletion Potential" égal à zéro, il répond donc en cela au besoin créé par le Protocole de Montréal. Le 1,1,1,2-tétrafluoroéthane est ininflammable et possède une toxicité très faible.

La propriété d'azéotrope ou de pseudo-azéotrope des compositions selon l'invention entraîne des avantages certains et connus.

L'invention est illustrée par les exemples suivants.

### Exemple 1

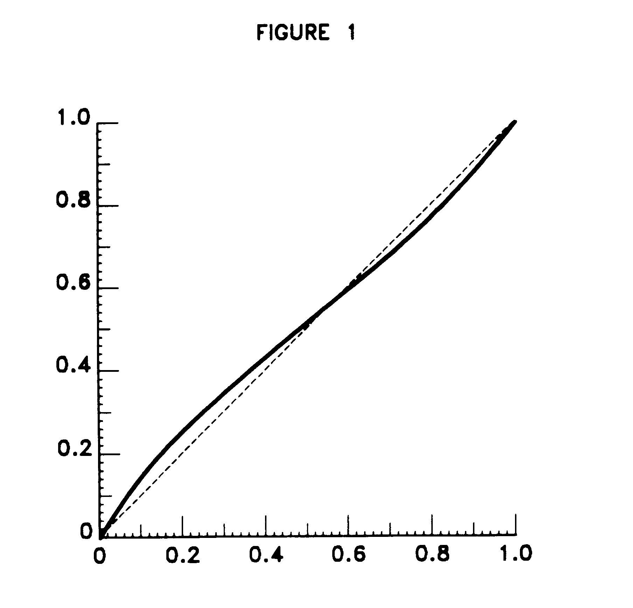

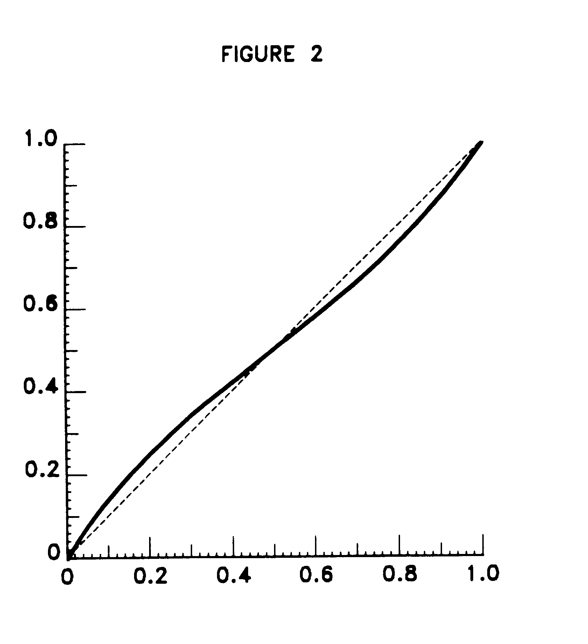

L'existence de la composition azéotropique ou pseudo-azéotropique comprenant le 1,1,1,2-tétrafluoroéthane et le chlorure de méthyle est établie par les résultats de mesure d'équilibre liquide-vapeur repris sur les figures 1 et 2.

Sur ces figures l'abscisse représente la fraction molaire en 1,1,1,2-tétrafluoroéthane de la composition dans la phase liquide et l'ordonnée représente la fraction molaire en 1,1,1,2-tétrafluoroéthane de cette même composition dans la phase vapeur.

La figure 1 a été tracée suite à des essais réalisés à la pression de 5.10⁵ Pa et la figure 2 à la pression de 1,3.10⁵ Pa.

Les résultats de mesure d'équilibre liquide-vapeur sont rassemblés dans le tableau I pour les mesures réalisées à la pression de 5.10⁵ Pa et dans le tableau II pour les mesures réalisées à la pression de 1,3.10⁵ Pa.

Dans ces tableaux :
T représente la température d'équilibre en °C,
P représente la pression d'équilibre en Pa,
X représente la fraction molaire en 1,1,1,2-tétrafluoroéthane mise en oeuvre de la composition dans la phase liquide,
Y représente la fraction molaire en 1,1,1,2-tétrafluoroéthane mesurée de cette même composition dans la phase vapeur.

Dans une cellule de mesure sont introduites des quantités connues de 1,1,1,2-tétrafluoroéthane et de chlorure de méthyle. Lorsque l'équilibre liquide-vapeur est établi, la température et la pression d'équilibre sont mesurées et la composition de la phase gazeuse est déterminée par chromatographie en phase gazeuse. On compare alors la fraction molaire de 1,1,1,2-tétrafluoroéthane dans la phase gazeuse à la fraction molaire mise en oeuvre de ce dernier. Dans la composition contenant le 1,1,1,2-tétrafluoroéthane et le chlorure de méthyle, la phase gazeuse peut être plus riche ou moins riche en 1,1,1,2-tétrafluoroéthane, selon la fraction molaire mise en oeuvre. Il y a donc un azéotrope entre le 1,1,1,2-tétrafluoroéthane et le chlorure de méthyle dont les caractéristiques mesurées se résument comme suit :

| pression kPa | température °C | fraction molaire du 1,1,1,2-tétrafluoroéthane dans l'azéotrope |
|---|---|---|
| 508 | 13,5 | ≃ 0,6 |
| 130 | - 23,8 | ≃ 0,5 |

Par extrapolation on obtient pour cet azéotrope une température normale d'ébullition (p=101,3 kPa) de - 28 à - 29°C et une composition de 0,45 à 0,5 mol de 1,1,1,2-tétrafluoroéthane/mol.

**Tableau I**

| T °C | P ,10⁵ Pa | x | y | y/x |
|---|---|---|---|---|
| 13.20 | 5.07 | 0.4961 | 0.5137 | 1.0355 |
| | 5.07 | | 0.5140 | 1.0361 |
| 12.15 | 4.87 | 0.7190 | 0.6946 | 0.96606 |
| | 4.87 | | 0.6943 | 0.96565 |
| 14.93 | 5.05 | 0.9394 | 0.9216 | 0.98105 |
| | 5.04 | | 0.9214 | 0.98084 |
| 16.00 | 5.09 | 0.1678 | 0.2314 | 1.3790 |
| | 5.09 | | 0.2299 | 1.3701 |
| 14.21 | 5.06 | 0.3387 | 0.3824 | 1.1290 |
| | 5.06 | | 0.3820 | 1.1278 |
| 13.54 | 5.08 | 0.5980 | 0.5934 | 0.99231 |
| | 5.05 | | 0.5937 | 0.99281 |
| 13.95 | 5.02 | 0.8410 | 0.8131 | 0.96683 |
| | 5.02 | | 0.8126 | 0.96623 |
| 17.77 | 4.97 | 0.06798 | 0.1141 | 1.6784 |
| | 4.95 | | 0.1117 | 1.6431 |

**Tableau II**

| T °C | P ,10⁵ Pa | x | y | y/x |
|---|---|---|---|---|
| - 20.38 | 1.31 | 0.06798 | 0.1207 | 1.7755 |
| - 22.75 | 1.31 | 0.2665 | 0.3205 | 0.2026 |
| | 1.31 | | 0.3113 | 0.1681 |
| - 23.83 | 1.30 | 0.3698 | 0.3989 | 1.0787 |
| | 1.29 | | 0.3996 | 1.0806 |
| - 21.03 | 1.33 | 0.1489 | 0.2120 | 1.4238 |
| | 1.33 | | 0.2134 | 1.4332 |
| - 23.77 | 1.29 | 0.5006 | 0.5058 | 1.0104 |
| | 1.29 | | 0.5038 | 1.0064 |
| - 24.23 | 1.30 | 0.6479 | 0.6171 | 0.95246 |
| | 1.30 | | 0.6168 | 0.95200 |
| - 22.84 | 1.30 | 0.8027 | 0.7556 | 0.94132 |
| | 1.30 | | 0.7583 | 0.94469 |
| - 21.67 | 1.31 | 0.9441 | 0.9196 | 0.97405 |
| | 1.29 | | 0.9198 | 0.97426 |

### Exemple 2

Les performances théoriques d'un fluide réfrigérant dans certaines conditions opératoires spécifiques peuvent être estimées au départ des propriétés thermodynamiques du fluide réfrigérant en utilisant certaines techniques standardisées d'analyse du cycle de réfrigération. Voir, par exemple, R.C. Downing, "Fluorocarbon Refrigerants Handbook", ch.3, Prentice-Hall, (1988).

Pour un cycle frigorifique donné, caractérisé par une température de vaporisation de - 30 °C, une surchauffe de la vapeur de 10 °C, une température de condensation de 35 °C, un sous-refroidissement du liquide nul, un rendement isentropique de 0,8, une efficacité volumétrique de 0,8, et pour une puisssance frigorifique de 10 kW, ont été calculés le coefficient de performance, le débit volumique et la température en fin de compression, avec comme fluide réfrigérant, le dichlorodifluorométhane (R 12), le 1,1,1,2-tétrafluoroéthane (R 134a), le chlorure de méthyle (R 40), un mélange R 134a/R 40 en proportions en volume 71,5/28,5 et un mélange R 134a/R 40 en proportions en volume 50/50.

Le coefficient de performance (COP) est une mesure particulièrement utile pour représenter l'efficacité thermodynamique relative d'un fluide réfrigérant dans un cycle frigorifique spécifique, impliquant l'évaporation et la condensation du fluide réfrigérant. Pour les frigoristes, ce terme représente la puissance frigorifique utile par rapport à l'énergie consommée par le compresseur.

Le débit volumique du fluide réfrigérant nécessaire pour obtenir une puissance frigorifique donnée reflète la capacité du fluide réfrigérant. Plus le débit nécessaire est faible, plus sa capacité est élevée. Pour un compresseur donné, plus le fluide réfrigérant a une capacité élevée, plus la puissance frigorifique fournie par l'évaporateur, délivrée à l'aide d'un compresseur donné, sera élevée.

La valeur de la température obtenue en fin de compression est utile pour juger de la faisabilité de l'utilisation du fluide réfrigérant dans les compresseurs classiques, pouvant classiquement tolérer une température en fin de compression de l'ordre de 100 °C. Cette limitation provient principalement d'un problème de tenue des huiles sous l'effet de la température.

Les valeurs obtenues sont rassemblées dans le tableau III

**Tableau III**

| fluide réfrigérant | % Volume | C.O.P | débit volumique (m³/h) | débit massique (kg/sec) | Température fin compression (°C) |
|---|---|---|---|---|---|
| CFC-12 | 100 | 2,24 | 68,6 | 0,092 | 72 |
| R 134a | 100 | 2,16 | 77 | 0,072 | 66,5 |
| R 40 | 100 | 2,34 | 69,8 | 0,029 | 155 |
| R 134a / R40 | 71,5/28,5 | 2,23 | 66 | 0,06 | 78,3 |
| R 134a / R40 | 50/50 | 2,28 | 62 | 0,051 | 91 |

### Exemple 3

Les limites de solubilité de certaines huiles lubrifiantes en fonction de la température ont été mesurées dans un mélange R 134a / R 40 (71,8 / 28,2 % vol).

Les huiles testées sont 2 huiles de type ester, commercialisées par DEA Mineralöl AG sous les marques Triton SEZ 22 et Triton SE 55. La première de ces huiles est une huile de classe de viscosité ISO VG 22, bien adaptée à l'emploi dans les réfrigérateurs ; la deuxième est une huile de classe de viscosité ISO VG 46-68, destinée aux systèmes mobiles d'air conditionné et aux unités de transports frigorifiques.

L'huile Triton SEZ 22 est complètement soluble dans le mélange R 134a / R 40 jusqu'à - 60 °C. Par comparaison, dans le R 134a seul, à - 57 °C, la solubilité de cette huile n'est que de 10 % poids.

Les résultats obtenus pour l'huile Triton SE 55 sont présentés dans le tableau IV, d'une part dans le mélange R 134a / R 40, et d'autre part, dans le R 134a pur.

**Tableau IV**

| Réfrigérant | Température 10 % solubilité | Température 20 % solubilité |
|---|---|---|
| R 134a / R 40 | - 55 °C | - 41 °C |
| R 134a | - 18 °C | - 7 °C |

## Revendications

1. Compositions comprenant le 1,1,1,2-tétrafluoroéthane et le chlorure de méthyle.

2. Compositions selon la revendication 1 caractérisées en ce qu'elles comprennent plus de 10 molaire de 1,1,1,2-tétrafluoroéthane.

3. Compositions selon la revendication 2 caractérisées en ce qu'elles comprennent de 40 à 55 molaire de 1,1,1,2-tétrafluoroéthane et de 45 à 60 molaire de chlorure de méthyle.

4. Compositions selon la revendication 3 caractérisées en ce qu'elles comprennent 48 % molaire de 1,1,1,2-tétrafluoroéthane (+/- 1 % molaire) et 52 % molaire de chlorure de méthyle et qu'elles forment un azéotrope.

5. Compositions selon la revendication 2 caractérisées en ce qu'elles comprennent de 55 à 80 % molaire de 1,1,1,2-tétrafluoroéthane et de 20 à 45 % molaire de chlorure de méthyle.

6. Compositions selon la revendication 5 caractérisées en ce qu'elles comprennent de 68 à 75 % molaire de 1,1,1,2-tétrafluoroéthane et de 25 à 32 % molaire de chlorure de méthyle.

7. Compositions selon la revendication 6 caractérisées en ce qu'elles comprennent 71,5 % molaire de 1,1,1,2-tétrafluoroéthane (+/- 1 % molaire) et 28,5 % molaire de chlorure de méthyle et qu'elles forment un pseudo-azéotrope.

8. Utilisation des compositions selon l'une quelconque des revendications 1 à 7 comme agent porogène du polystyrène.

9. Utilisation des compositions selon l'une quelconque des revendications 1 à 7 comme fluide réfrigérant.

10. Utilisation des compositions selon l'une quelconque des revendications 1 à 7 comme agent pour gonfler des mousses de polyuréthane ou de polyoléfines.

## Patentansprüche

1. Zusammensetzungen, die 1,1,1,2-Tetrafluorethan und Methylchlorid umfassen.

2. Zusammensetzungen gemäß Anspruch 1, dadurch gekennzeichnet, daß sie mehr als 10 Mol-% 1,1,1,2-Tetrafluorethan enthalten.

3. Zusammensetzungen gemäß Anspruch 2, dadurch gekennzeichnet, daß sie 40 bis 55 Mol-% 1,1,1,2-Tetrafluorethan und 45 bis 60 Mol-% Methylchlorid enthalten.

4. Zusammensetzungen gemäß Anspruch 3, dadurch gekennzeichnet, daß sie 48 Mol-% 1,1,1,2-Tetrafluorethan (+/- 1 Mol-%) und 52 Mol-% Methylchlorid enthalten und daß sie ein Azeotrop bilden.

5. Zusammensetzungen gemäß Anspruch 2, dadurch gekennzeichnet, daß sie 55 bis 80 Mol-% 1,1,1,2-Tetrafluorethan und 20 bis 45 Mol-% Methylchlorid umfassen.

6. Zusammensetzungen gemäß Anspruch 5, dadurch gekennzeichnet, daß sie 68 bis 75 Mol-% 1,1,1,2-Tetrafluorethan und 25 bis 32 Mol-% Methylchlorid umfassen.

7. Zusammensetzungen gemäß Anspruch 6, dadurch gekennzeichnet, daß sie 71,5 Mol-% 1,1,1,2-Tetrafluorethan (+/- 1 Mol-%) und 28,5 Mol-% Methylchlorid umfassen und daß sie ein Pseudoazeotrop bilden.

8. Verwendung der Zusammensetzungen gemäß einem der Ansprüche 1 bis 7 als Porenbildner für Polystyrol.

9. Verwendung der Zusammensetzungen gemäß einem der Ansprüche 1 bis 7 als Kühlmittel.

10. Verwendung der Zusammensetzungen gemäß einem der Ansprüche 1 bis 7 als Blähmittel für Polyurethan- oder Polyolefinschäume.

## Claims

1. Compositions containing 1,1,1,2-tetrafluoroethane and methyl chloride.

2. Compositions according to Claim 1, characterised in that they contain more than 10 mol% of 1,1,1,2tetrafluoroethane.

3. Compositions according to Claim 2, characterised in that they contain from 40 to 55 mol% of 1,1,1,2tetrafluoroethane and from 45 to 60 mol% of methyl chloride.

4. Compositions according to Claim 3, characterised in that they contain 48 mol% of 1,1,1,2tetrafluoroethane (+/- 1 mol%) and 52 mol% of methyl chloride and that they form as azeotrope.

5. Compositions according to Claim 2, characterised in that they contain from 55 to 80 mol% of 1,1,1,2tetrafluoroethane and from 20 to 45 mol% of methyl chloride.

6. Compositions according to Claim 5, characterised in that they contain from 68 to 75 mol% of 1,1,1,2tetrafluoroethane and from 25 to 32 mol% of methyl chloride.

7. Compositions according to Claim 6, characterised in that they contain 71.5 mol% of 1,1,1,2tetrafluoroethane (+/- mol%) and 28.5 mol% of methyl chloride and that they form a pseudo-azeotrope.

8. Use of the compositions according to any one of Claims 1 to 7 as porogenic agents for polystyrene.

9. Use of the compositions according to any one of Claims 1 to 7 as refrigerating fluids.

10. Use of compositions according to any one of Claims 1 to 7 as blowing agents for polyurethane or polyolefin foams.
